# EUROPEAN PATENT SPECIFICATION

(11) **EP 1 210 295 B1**
(45) Date of publication and mention of the grant of the patent: **12.01.2005**
(21) Application number: 00944062.9
(22) Date of filing: 28.06.2000
(51) Int. Cl.: C01G 51/04

(54) **PROCESS FOR MAKING HIGH DENSITY AND LARGE PARTICLE SIZE COBALT HYDROXIDE OR COBALT MIXED HYDROXIDES AND A PRODUCT MADE BY THIS PROCESS**
VERFAHREN ZUR HERSTELLUNG VON KOBALTHYDROXIDEN ODER GEMISCHTEN KOBALTHYDROXIDEN MIT HOHER DICHTE UND GROSSER TEILCHENGRÖSSE, SOWIE DIE MIT DIESEM VERFAHREN ERHALTENEN PRODUKTE
PROCEDE DE FABRICATION D'HYDROXYDE DE COBALT OU D'HYDROXYDES DE COBALT MELANGES HAUTE DENSITE ET A GRANULOMETRIE ELEVEE, ET PRODUIT OBTENU CONFORMEMENT AUDIT PROCEDE

(30) Priority: 29.06.1999 FI 991478
(43) Date of publication of application: 05.06.2002
(73) Proprietor: OMG Finland Oy, 02170 Espoo (FI)
(72) Inventor: MARTIKAINEN, Mika, FIN-67100 Kokkola (FI)
(74) Representative: Risku, Ira Marjatta
(86) International application number: PCT/FI2000/000581
(87) International publication number: WO 2001/000532

(56) References cited:
- US-A- 5 057 299
- US-A- 5 569 444

## Description

The invention relates to a method for preparing cobaltous hydroxide with a high density and a large particle size or an alloy hydroxide of cobalt and some other metal. The invention also relates to the product produced with this method.

Cobaltous hydroxide is used in many applications, for instance as an additive in chargeable NiMH and NiCd accumulators in the electronics industry. In addition, it is suitable for use as a precursor in the preparation of oxide products, such as LiCoO₂ and LiCoMO₂ (M stands for metal). Cobaltous hydroxide is also used as a catalyst or a precursor in catalyst production. A hydroxide product comprising any other metal in addition to cobalt, such as nickel, manganese, magnesium or aluminium, is also suitable for use for the purposes mentioned above.

There are many known methods for preparing cobaltous hydroxide in the field. The method of US patent 5,057,299 prepares cobaltous hydroxide by combining a cobaltous ion with a complexing agent, thus producing a water-soluble cobalt complex. Hydroxide ion is added to this, and the mixture is heated and kept in hydrothennal conditions until the cobaltous hydroxide precipitates. With the method of this US patent, the particle size increases at higher temperatures. Nonetheless, the method of the patent allows the particle size to be controlled only in the range from approx. 0.05 to 0.5 µm by means of the temperature.

In applications of the accumulator industry, NiCd and NIMH accumulators are required to have good capacity. The capacity can be raised by using cobaltous hydroxide with maximum density as an additive in accumulators. In addition to this, it is important that the cobaltous hydroxide used in the production of oxide products has a small specific surface and a high density. The purpose of the present invention is to provide a method for preparing cobaltous hydroxide particles with a large particle size or alloy hydroxide particles of cobalt and some other metal with a method that is easy to control. The purpose is to achieve cobaltous hydroxide particles or alloy hydroxide particles of cobalt and some other metal with a particle size above 1 µm, preferably above 3µm. This has been achieved according to the invention in the manner described in the accompanying claims.

Besides cobaltous hydroxide, the method in accordance with the invention can be used to prepare alloy hydroxides of cobalt and one or more other metals. The other metals used may comprise for instance nickel, manganese, magnesium or aluminium, or alloys of these, depending on the purpose of use.

The starting material used in the method of the invention is an aqueous brine of cobalt or cobalt and alloy metals in the form of sulphate, nitrate or chloride. The concentration of the solution may vary in the range from 10 to 120 g/l calculated on the total metal content.

A complexing agent that forms an ammonium complex with the metal ion is added to this metal brine. The complexing agent may be ammonium sulphate, aqueous ammonia or any other ammonium ion source. In principle, the complexing agent may also be some other substance forming a complex with a metal, such as for instance EDTA. In the present invention, ammonium ion has nevertheless proved a good complexing agent owing to its economic price and good complexing characteristics. The molar ratio of the ammonium complexing agent to the metal introduced in the reactor is preferably about 0.5-3, most preferably about 1.5-2.0. The reaction is performed under alkaline conditions and NaOH is preferably used for pH regulation. The preferred pH is in the range 10-13, most preferably the pH is in the range 11.2-12.0. The reaction is carried out at a temperature of about 40-90 °C, preferably at a temperature of about 70 °C. The method in accordance with the invention yields cobaltous hydroxide with a density of about 0.5-2.2 g/cm³, a particle size above approx. 1 µm, typically approx. 1-20 µm and a specific surface of approx. 0.5-20 m²/g.

The particles obtained with the method of the invention are plate-like cobaltous hydroxide particles in the shape of a hexagon. It was found in connection with the invention that chloride solutions yield thicker particles than sulphate-based solutions, with the other reaction conditions unaltered. Thicker particles are considered more suitable for instance for the preparation of lithium cobalt oxide.

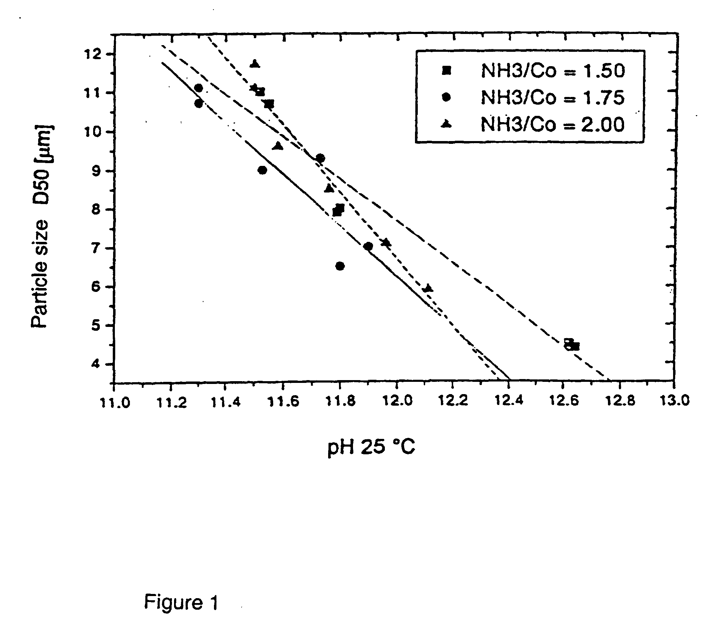

In the method of the invention, the particle size of cobaltous hydroxide can be controlled by means of the molar ratio of the ammonium ion to the cobalt ion and of the pH used. Figure 1 shows the particle size variation as a function of pH with varied ratios NH₃ ion/Co. The figure shows that a pH increase reduces the particle size, and that the higher the ratio NH₃ ion/Co, the more notable the effect of the pH on the particle size.

The invention is illuminated below by means of examples. In examples 1-3 the method has been carried out as a comparison without complexing with ammonium ions. Examples 4-6 illustrate the method of the invention, in which an ammonium complex with cobalt is formed. Example 7 exemplifies the method of the invention, in which nickel was used in addition to cobalt. The reaction temperature in the examples was 70 °C.

### Comparative example 1

An aqueous solution of CoCl₂ (30 g/l Co) was introduced continually into a first reactor. The pH was maintained constant in the range 11.8-12.0 by adding sodium hydroxide solution. The overflow of the first reactor was conducted to the second reactor, where sodium hydroxide was added to the flow, resulting in pH 13.5. The overflow from the second reactor was filtered and washed with water. The washed Co(OH)₂ cake was dried.

The average particle size D50 of the dried Co(OH)₂ was 0.9 µm when determined with a Malvern Mastersizer particle size analyser (the determination was performed with laser diffraction on an aqueous Co(OH)₂ slurry). The density was 0.5 g/cm³ (ASTM B527-93). The specific surface (BET ASTM D4567-86) was 30 m²/g.

### Comparative example 2

An aqueous solution of CoCl₂ (30 g/l Co) was introduced continually into the first reactor. The pH was maintained constant in the range 11.6-11.8 by adding sodium hydroxide solution. The overflow of the first reactor was conducted to the second reactor, where sodium hydroxide was added to the flow so as to obtain pH 13.5. The overflow from the second reactor was filtered and washed with water. The washed Co(OH)₂ cake was dried.

The average particle size D50 of the dried Co(OH)₂ was 1.1 µm when determined with a Malvern Mastersizer particle size analyser (the determination was performed with laser diffraction on an aqueous Co(OH)₂ slurry). The density was 0.7 g/cm³ (ASTM B527-93). The specific surface (BET ASTM D4567-86) was 29 m²/g.

### Comparative example 3

An aqueous solution of CoCl₂ (30 g/l Co) was introduced continually into the first reactor. The pH was maintained constant in the range 11.2-11.4 by adding sodium hydroxide solution. The overflow of the first reactor was conducted to the second reactor, where sodium hydroxide was added to the flow so as to obtain pH 13.5.

The overflow from the second reactor was filtered and washed with water. The washed Co(OH)₂ cake was dried.

The average particle size D50 of the dried Co(OH)₂ was 1.9 µm when determined with a Malvern Mastersizer particle size analyser (the determination was performed with laser diffraction on an aqueous Co(OH)₂ slurry). The density was 0.6 g/cm³ (ASTM B527-93). The specific surface (BET ASTM D4567-86) was 35 m²/g.

### Example 4

An aqueous solution of CoCl₂ (30 g/l Co) was introduced continually into the first reactor, which contained an aqueous, solution of ammonia with the molar ratio 2 metal/ammonia. The pH was maintained constant in the range 11.8-12.0 by adding sodium hydroxide solution. The overflow of the first reactor was conducted to the second reactor, where sodium hydroxide was added to the flow so as to obtain pH 13.5. The overflow from the second reactor was filtered and washed with water. The washed Co(OH)₂ cake was dried.

The average particle size D50 of the dried Co(OH)₂ was 1.8 µm when determined with a Malvern Mastersizer particle size analyser (the determination was performed with laser diffraction on an aqueous Co(OH)₂ slurry). The density was 0.7 g/cm³ (ASTM B527-93). The specific surface (BET ASTM D4567-86) was 5.8 m²/g.

### Example 5

An aqueous solution of CoCl₂ (30 g/l Co) was introduced continually into the first reactor, which contained an aqueous solution of ammonia with the molar ratio 2 metal/ammonium. The pH was maintained constant in the range 11.6-11.8 by adding sodium hydroxide solution. The overflow of the first reactor was conducted to the second reactor, where sodium hydroxide was added to the flow so as to obtain pH 13.5. The overflow from the second reactor was filtered and washed with water. The washed Co(OH)₂ cake was dried.

The average particle size D50 of the dried Co(OH)₂ was 3.9 µm when determined with a Malvern Mastersizer particle size analyser (the determination was performed with laser diffraction on an aqueous Co(OH)₂ slurry). The density was 1.2 g/cm³ (ASTM B527-93). The specific surface (BET ASTM D4567-86) was 2.6 m²/g.

### Example 6

An aqueous solution of CoCl₂ (30 g/l Co) was introduced continually into the first reactor, which contained an aqueous solution of ammonia with the molar ratio 2 metal/ammonium. The pH was maintained constant in the range 11.2-11.4 by adding sodium hydroxide solution. The overflow of ,the first reactor was conducted to the second reactor, where sodium hydroxide was added to the flow so as to obtain pH 13.5. The overflow from the second reactor was filtered and washed with water. The washed Co(OH)₂ cake was dried.

The average particle size D50 of the dried Co(OH)₂ was 7.4 µm when determined with a Malvern Mastersizer particle size analyser (the determination was performed with laser diffraction on an aqueous Co(OH)₂ slurry). The density was 1.7 g/cm³ . (ASTM B527-93). The specific surface (BET ASTM D4567-86) was 1.8 m²/g.

### Example 7

An alloy brine was prepared which contained CoCl₂ and NiCl₂ solutions (30 g/l Co and 8g/l Ni). The solution was introduced continually into the first reactor, which contained an aqueous solution of ammonia with the molar ratio metal/ammonium being 2. The pH was maintained constant in the range 11.2-11.4 by adding sodium hydroxide solution. The overflow of the first reactor was conducted to the second reactor, where sodium hydroxide was added to the flow so as to obtain pH 13.5. The overflow from the second reactor was filtered and washed with water. The washed Co(OH)₂ cake was dried.

The chemical analysis indicated precipitation of alloy hydroxide. The average particle size D50 of the dried Co0.8Ni0.2(OH)₂ was 6.9 µm when determined with a Malvern Mastersizer particle size analyser (the determination was performed with laser diffraction on an aqueous Co(OH)₂ slurry). The density was 1.6 g/cm³ (ASTM B527-93). The specific surface (BET ASTM D4567-86) was 3.2 m²/g.

To facilitate the comparison, the table below shows the physical properties of the products exemplified above. The table also shows the crystal size of the products, which was measured with an X-ray diffraction meter.

**Table 1**

| Example | Precipitated pH | Complexing agent | Average particle size (µm) | Density (g/cm³) | Specific surface (m²/g) | XRD (001) (nm) | XRD (101) (nm) |
|---|---|---|---|---|---|---|---|
| Comparative example 1 | 11.8-12.0 | None | 0.9 | 0.5 | 30 | 23 | 27 |
| Comparative example 2 | 11.6-11.8 | None | 1.1 | 0.7 | 29 | 26 | 30 |
| Comparative example 3 | 11.2-11.4 | None | 1.9 | 0.6 | 35 | 27 | 32 |
| Example 4 | 11.8-12.0 | NH₃ ion | 1.8 | 0.7 | 5.8 | 50 | 49 |
| Example 5 | 11.6-11.8 | NH₃ ion | 3.9 | 1.2 | 2.6 | 56 | 56 |
| Example 6 | 11.2-11.4 | NH₃ion | 7.4 | 1.7 | 1.8 | 61 | 64 |
| Example 7 | 11.2-11.4 | NH₃ ion | 6.9 | 1.6 | 3.2 | 59 | 57 |

The table shows that, with ammonium ion used as the complexing agent, the product had a larger particle size and higher density than without a complexing agent. As an exception from this, the product of example 4 had a particle size and a density approximately equal to those of the comparative examples. In fact, the specific surface and crystal size of this product also equalled the values of the products of examples 5-7.

A number of applications of the invention have been presented above. The invention is naturally not restricted to the examples above.

## Claims

1. Cobaltous hydroxide or alloy hydroxide formed of cobalt and some other metal, **characterised in** having a density of about 0.5-2.2 g/cm³, a particle size above about 1 µm, typically about 1-20 µm, and a specific surface of about 0.5-20 m²/g, and that it is prepared by adding a complexing agent and hydroxide ion under alkaline conditions to an aqueous chloride solution of cobalt or to an aqueous chloride solution of an alloy of cobalt and some other metal in order to form metal hydroxide, wherein the complexing agent is selected so as to form an ammonium complex with the metal ion, the molar ratio of complexing agent to metal being approx. 0.5-3 and the pH being adjusted in the range 10-13.

2. A cobaltous hydroxide or alloy hydroxide formed of cobalt and some other metal as defined in claim 1, **characterised in that** the pH is regulated in the range 11.2-12.0.

3. A cobaltous hydroxide or alloy hydroxide formed of cobalt and some other metal as defined in claim 1, **characterised in that** the other metal is nickel, manganese, magnesium or aluminium, or alloys of these.

4. A cobaltous hydroxide or alloy hydroxide formed of cobalt and some other metal as defined in claim 1, **characterised in that** the concentration of the chloride solution is in the range from 10 to 120 g/l calculated on the total metal content.

5. A cobaltous hydroxide or alloy hydroxide formed of cobalt and some other metal as defined in claim 1, **characterised in that** the complexing agent is ammonium sulphate or aqueous ammonia

6. A cobaltous hydroxide or alloy hydroxide formed of cobalt and some other metal as defined in claim 1, **characterised in that** the molar ratio of complexing agent to metal is approx. 1.5-2.

7. A cobaltous hydroxide or alloy hydroxide formed of cobalt and some other metal as defined in claim 1, **characterised in that** NaOH is used for pH regulation.

8. A cobaltous hydroxide or alloy hydroxide formed of cobalt and some other metal as defined in claim 1, **characterised in that** the reaction is carried out at a temperature of about 40-90 °C.

9. A cobaltous hydroxide or alloy hydroxide formed of cobalt and some other metal as defined in claim 8, **characterised in that** the reaction is carried out at a temperature of about 70 °C.

## Patentansprüche

1. Kobalthydroxid, oder Mischhydroxid, das Kobalt und ein anderes Metall umfasst, **dadurch gekennzeichnet, dass** es eine Dichte von 0.5-2.2 g/cm³, eine Teilchengröße über etwa 1 *µ*m, üblicherweise etwa 1-20 *µ*m und eine spezifische Oberfläche von etwa 0.5-20 m²/g hat, und dass es hergestellt wird, indem ein Komplexbildner und Hydroxidionen bei alkalischen Bedingungen zu einer wässrigen Lösung von Kobaltchlorid oder zu einer wässrigen Lösung eines gemischten Chlorids von Kobalt und einem anderen Metall zugegeben wird, um ein Hydroxid zu bilden, wobei der Komplexbildner so gewählt wird, dass er einen Ammoniumkomplex mit dem Metallion bildet, wobei das Molverhältnis des Komplexbildners zum Metall ungefähr 0,5 - 3 beträgt, und der pH-Wert im Bereich 10 - 13 eingestellt wird.

2. Kobalthydroxid oder Mischhydroxid, das Kobalt und ein anderes Metall umfasst, wie in Anspruch 1 beschrieben, **dadurch gekennzeichnet, dass** der pH-Wert im Bereich von 11,2 - 12,0 geregelt wird.

3. Kobalthydroxid oder Mischhydroxid, das Kobalt und ein anderes Metall umfasst, wie in Anspruch 1 beschrieben, **dadurch gekennzeichnet, dass** das andere Metall Nickel, Mangan, Magnesium oder Aluminium, oder eine Mischung davon ist.

4. Kobalthydroxid oder Mischhydroxid, das Kobalt und ein anderes Metall umfasst, wie in Anspruch 1 beschrieben, **dadurch gekennzeichnet, dass** die Konzentration der Chloridlösung im Bereich von 10 bis 120 g/l, berechnet als Gesamtmetallgehalt ist.

5. Kobalthydroxid oder Mischhydroxid, das Kobalt und ein anderes Metall umfasst, wie in Anspruch 1 beschrieben, **dadurch gekennzeichnet, dass** der Komplexbildner Ammoniumsulfat oder wässriger Ammoniak ist.

6. Kobalthydroxid oder Mischhydroxid, das Kobalt und ein anderes Metall umfasst, wie in Anspruch 1 beschrieben, **dadurch gekennzeichnet, dass** das Molverhältnis von Komplexbildner zu Metall ungefähr 1,5 - 2 ist.

7. Kobalthydroxid oder Mischhydroxid, das Kobalt und ein anderes Metall umfasst, wie in Anspruch 1 beschrieben, **dadurch gekennzeichnet, dass** für die Regulierung des pH-Wertes NaOH verwendet wird.

8. Kobalthydroxid oder Mischhydroxid, das Kobalt und ein anderes Metall umfasst, wie in Anspruch 1 beschrieben, **dadurch gekennzeichnet, dass** die Reaktion bei einer Temperatur von etwa 40-90 °C durchgeführt wird.

9. Kobalthydroxid oder Mischhydroxid, das Kobalt und ein anderes Metall umfasst, wie in Anspruch 8 beschrieben, **dadurch gekennzeichnet, dass** die Reaktion bei einer Temperatur von etwa 70 °C durchgeführt wird.

## Revendications

1. Chlorure cobalteux ou alliage hydroxyde formé à partir de cobalt et d'un autre métal, **caractérisé par** une densité d'environ 0,5 à 2,2 g/cm³, une dimension de particule qui dépasse environ 1 µm, typiquement environ 1 à 20 µm, et une surface spécifique d'environ 0,5 à 20 m²/g, et qui se prépare moyennant adjonction d'un agent complexant et d'un ion hydroxyde sous conditions alcalines à une solution aqueuse de chlorure de cobalt ou à une solution aqueuse de chlorure d'un alliage de cobalt et d'un autre métal pour former un hydroxyde métallique, selon lequel l'agent complexant est choisi de façon à former un complexe d'ammonium avec un ion métallique, le rapport molaire de l'agent complexant et du métal étant compris entre environ 0,5 et 3, et le pH étant ajusté pour s'inscrire dans une plage comprise entre 10 et 13.

2. Hydroxyde cobalteux ou alliage d'hydroxyde formé à partir de cobalt et d'un autre métal tel que défini à la revendication 1, **caractérisé en ce que** le pH se trouve réglé pour s'inscrire dans une plage comprise entre 11,2 et 12,0.

3. Hydroxyde cobalteux ou alliage d'hydroxyde formé à partir de cobalt et d'un autre métal tel que défini à la revendication 1, **caractérisé en ce que** l'autre métal correspond au nickel, au manganèse, au magnésium, ou à l'aluminium, ou à des alliages correspondants.

4. Hydroxyde cobalteux ou alliage d'hydroxyde formé à partir de cobalt et d'un autre métal tel que défini à la revendication 1, **caractérisé en ce que** la concentration de la solution de chlorure se trouve comprise entre 10 et 120 g/l, calculée à partir du contenu total du métal.

5. Hydroxyde cobalteux ou alliage d'hydroxyde formé à partir de cobalt et d'un autre métal tel que défini à la revendication 1, **caractérisé en ce que** l'agent complexant est du sulfate d'ammonium ou de l'ammonium aqueux.

6. Hydroxyde cobalteux ou alliage d'hydroxyde formé à partir de cobalt et d'un autre métal tel que défini à la revendication 1, **caractérisé en ce que** le rapport molaire de l'agent complexant et du métal est d'environ 1,5 à 2.

7. Hydroxyde cobalteux ou alliage d'hydroxyde formé à partir de cobalt et d'un autre métal tel que défini à la revendication 1, **caractérisé en ce que** le NaOH s'utilise pour régler le pH.

8. Hydroxyde cobalteux ou alliage d'hydroxyde formé à partir de cobalt et d'un autre métal tel que défini à la revendication 1, **caractérisé en ce que** la réaction se produit à température d'environ 40 à 90 °C.

9. Hydroxyde cobalteux ou alliage d'hydroxyde formé à partir de cobalt et d'un autre métal tel que défini à la revendication 8, **caractérisé en ce que** la réaction se produit à température d'environ 70 °C.
